# EUROPÄISCHE PATENTSCHRIFT

(11) **EP 2 214 863 B1**
(45) Veröffentlichungstag und Bekanntmachung des Hinweises auf die Patenterteilung: **20.08.2014**
(21) Anmeldenummer: 08805257.6
(22) Anmeldetag: 13.10.2008
(51) Int. Cl.: B23Q 1/00

(54) **KUPPLUNGSEINRICHTUNG ZUR ÜBERTRAGUNG EINES MEDIUMS VON EINEM ORTSFESTEN TEIL AUF EIN DREHBARES TEIL**
COUPLING UNIT FOR TRANSFERRING A MEDIUM FROM A STATIONARY PART TO A ROTARY PART
DISPOSITIF D'ACCOUPLEMENT POUR TRANSMETTRE UN FLUIDE D'UNE PARTIE FIXE À UNE PARTIE ROTATIVE

(30) Priorität: 29.10.2007 DE 102007051562
(43) Veröffentlichungstag der Anmeldung: 11.08.2010
(73) Patentinhaber: Robert Bosch GmbH, 70442 Stuttgart (DE)
(72) Erfinder: KOCHENDOERFER, Ralf, 71229 Leonberg (DE); GNAUSCH, Tobias, 70192 Stuttgart (DE)
(86) Internationale Anmeldenummer: PCT/EP2008/063733
(87) Internationale Veröffentlichungsnummer: WO 2009/056439

(56) Entgegenhaltungen:
- WO-A-03/104707
- DE-A1- 19 959 072
- DE-C1- 3 542 014
- US-A- 5 240 039

## Beschreibung

### Stand der Technik

Die vorliegende Erfindung betrifft eine Kupplungseinrichtung zur Übertragung eines Mediums von einem ortsfesten Teil auf ein drehbares Teil.

Bei Maschinen, wie z.B. Werkzeugmaschinen oder Messmaschinen, sind üblicherweise Spannvorrichtungen vorgesehen, mittels denen ein Bauteil für eine Bearbeitung oder einen Messvorgang eingespannt werden kann. Derartige Spannvorrichtungen sind üblicherweise an drehbaren Spindeln angeordnet und können mechanisch oder mittels eines unter Druck stehenden Mediums oder mittels eines Vakuums gespannt bzw. entspannt werden. Dabei ist es bekannt, beispielsweise eine Druckleitung in einer Rotationsachse des drehbaren Teils zu führen und dabei das Arbeitsmedium für den Spannvorgang bzw. den Entspannvorgang zuzuführen bzw. abzuleiten. Grundsätzlich haben sich derartige Spannvorrichtungen bewährt. Allerdings kann es vorkommen, dass aus technischen Gründen es nicht möglich ist, die Leitung für das Medium in die Rotationsachse zu legen. Dann sind aufwendige Konstruktionen notwendig, um das Medium vom ortsfesten Teil auf das rotierende Teil und zu den Spannvorrichtungen zu führen. Auch gibt es Anwendungssituationen, in welchen eine Nachrüstung von einer mittels eines Mediums betriebenen Spannvorrichtung gewünscht sind. Aus der US-B-5,240,039, der DE 35 42 014 C1 und der DE 199 59 072 A1 sind Drehdurchführungen bekannt, bei denen die Mediumsleitung in der Rotationsachse liegt.

### Vorteile der Erfindung

Die erfindungsgemäße Kupplungseinrichtung zur Übertragung eines Mediums von einem ortsfesten Teil auf ein drehbares Teil mit den Merkmalen des Patentanspruchs 1 weist demgegenüber den Vorteil auf, dass sie eine einfache und sichere Kopplung zwischen dem ortsfesten und dem drehbaren Teil ermöglicht, um ein Medium vom ortsfesten Teil auf das drehbare Teil zu übertragen bzw. abzuleiten. Die erfindungsgemäße Kupplungseinrichtung stellt somit eine Verbindung zwischen einem ortsfesten Leitungsteil für das Medium und einem sich mit dem drehbaren Teil mitdrehenden Leitungsteil für das Medium bereit. Dabei kann die erfindungsgemäße Kupplungseinrichtung einfach aufgebaut sein und ist kostengünstig herstellbar. Ferner kann die erfindungsgemäße Kupplungseinrichtung leicht, auch z.B. bei bestehenden Spindeln, mit Spannfuttern nachgerüstet werden. Dies wird erfindungsgemäß dadurch erreicht, dass die Kupplungseinrichtung einen ortsfesten ersten Ring und einen drehbaren zweiten Ring aufweist. Der ortsfeste erste Ring ist dabei am ortsfesten Teil fixiert und der drehbare zweite Ring ist am drehbaren Teil fixiert und dreht sich mit diesem mit. Ferner ist zwischen dem ersten und dem zweiten Ring ein Lager angeordnet, und zwischen dem ersten und zweiten Ring ist ein Ringspalt vorgesehen, welcher mit dem Medium gefüllt ist. An dem Ringspalt ist eine Zufuhrleitung für das Medium, welche am ortsfesten Teil angeordnet ist, und wenigstens eine Abfuhrleitung am drehbaren zweiten Ring angeordnet, welche das Medium beispielsweise zur Spanneinrichtung führt. Zur Sicherstellung der Dichtheit ist ferner ein inneres Dichtelement, welches den Ringspalt an einer radialen Innenseite abdichtet, und ein äußeres Dichtelement, welches den Ringspalt an einer radialen Außenseite abdichtet, vorgesehen.

Die Unteransprüche zeigen bevorzugte Weiterbildungen der Erfindung.

Vorzugsweise umfasst die Kupplungseinrichtung ferner eine Ausgleichseinheit, welche zwischen dem ortsfesten ersten Ring und dem ortsfesten Teil angeordnet ist. Die Ausgleichseinheit ist dazu vorgesehen, eine Koaxialität der Kupplungseinrichtung bezüglich einer Rotationsachse des drehbaren Teils sicherzustellen. Hierdurch kann insbesondere eine Schrägstellung des ersten und zweiten Rings gegenüber der Rotationsachse ausgeglichen werden.

Besonders bevorzugt ist das Dichtelement ein Dichtring, insbesondere aus einem elastischen Dichtmaterial, oder eine Labyrinthdichtung.

Gemäß einer weiteren bevorzugten Ausgestaltung der vorliegenden Erfindung ist das Lager zwischen dem ersten und zweiten Ring ein Wälzlager, insbesondere ein Kugellager oder Zylinderrollenlager. Das Wälzlager weist dabei einen offenen Käfig auf, um einen Durchlass für das Medium sicherzustellen.

Besonders bevorzugt sind am Ringspalt mehrere Abfuhrleitungen angeordnet, so dass, ausgehend vom Ringspalt, das Medium zu mehreren verschiedenen Punkten am drehbaren Teil geführt werden kann.

Weiter bevorzugt ist die Abfuhrleitung mit einer Spannvorrichtung zum Spannen von Werkstücken verbunden. Dadurch kann ein Spannvorgang des Werkstücks mittels des Mediums bzw. eines Vakuums realisiert werden.

Besonders bevorzugt ist die Kupplungseinrichtung zentrisch zu einer Rotationsachse des drehbaren Teils angeordnet. Hierdurch kann insbesondere eine Unwucht während des Betriebes vermieden werden.

Die vorliegende Erfindung kann insbesondere zur Nachrüstung von mechanischen Spannvorrichtungen verwendet werden, um ein Spannen bzw. Freigeben mittels des Mediums zu ermöglichen. Besonders bevorzugt wird die vorliegende Erfindung dabei bei Werkzeugmaschinen oder Messmaschinen zur exakten Vermessung von Bauteilen verwendet. Auch kann die vorliegende Kupplungseinrichtung für das Medium bei Spannvorrichtungen bzw. Maschinen eingesetzt werden, bei denen aus verschiedenen Gründen eine Zuleitung bzw. Ableitung in der Rotationsachse nicht möglich ist.

Besonders bevorzugt ist das Medium Luft oder Öl, wobei das Medium hierbei in einem Unterdruckbereich oder einem Überdruckbereich gehalten werden kann.

Die vorliegenden Erfindung kann ferner beispielsweise auch zur Übertragung eines Mediums bei Gelenken o.ä. verwendet werden.

### Zeichnung

Nachfolgend wird unter Bezugnahme auf die begleitende Zeichnung eine Kupplungseinrichtung gemäß einem Ausführungsbeispiel der Erfindung beschrieben. In der Zeichnung ist:
- Figur 1: eine schematische Schnittansicht einer Kupplungseinrichtung gemäß einem ersten Ausführungsbeispiel der vorliegenden Erfindung, und
- Figur 2: eine schematische Sclmittansicht einer Kupplungseinrichtung gemäß einem zweiten Ausführungsbeispiel der Erfindung.

### Bevorzugte Ausführungsfonnen der Erfindung

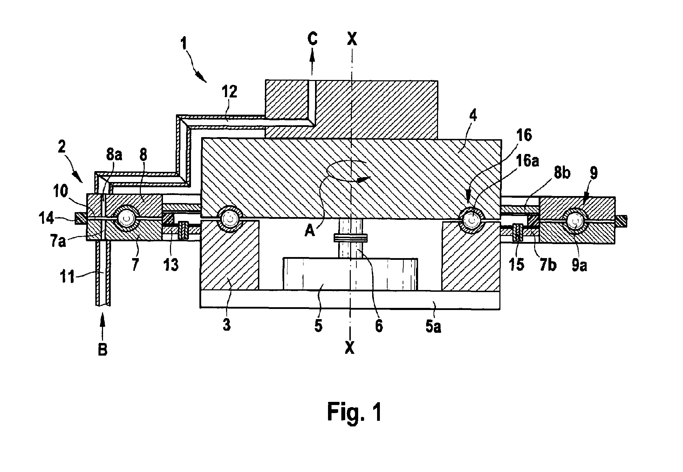

Nachfolgend wird unter Bezugnahme auf Figur 1 eine Spannvorrichtung 1 mit einer erfindungsgemäßen Kupplungseinrichtung 2 gemäß einem ersten Ausführungsbeispiel der Erfindung im Detail beschrieben.

Figur 1 zeigt dabei lediglich schematisch die Spannvorrichtung 1, welche in diesem Ausführungsbeispiel in einer Messmaschine eingebaut ist und Teile einspannen kann, welche gemessen werden sollen. Figur 1 zeigt die Spannvorrichtung 1 dabei ohne Spannbacken, welche jedoch in bekannter Weise ausgeführt sind. Die Spannvorrichtung 1 umfasst eine drehbare Spindel mit einem ortsfesten Teil 3 und einem rotierenden Teil 4. Zwischen dem ortsfesten Teil 3 und dem rotierenden Teil 4 ist ein Lager 16 mit einer Vielzahl von Kugeln 16a vorgesehen. Der rotierende Teil 4 rotiert dabei um eine Rotationsachse X-X in Richtung des Pfeils A. Der rotierende Teil 4 wird dabei über einen Motor 5, welcher eine Antriebswelle 6 antreibt, die mit dem rotierenden Teil 4 verbunden ist, angetrieben. Der Motor 5 ist dabei am ortsfesten Teil 3 an einer Grundplatte 5a befestigt. Die Spannbacken der Spannvorrichtung 1 sollen in diesem Ausführungsbeispiel mittels eines gasförmigen Mediums, insbesondere Luft, durch Überdruck und/oder Unterdruck betätigt werden, d.h., ein Werkstück spannen bzw. ein Werkstück freigeben. Hierzu ist es notwendig, dass das gasförmige Medium vom ortsfesten Bereich der Spannvorrichtung auf den rotierenden Bereich übergeben werden kann.

Hierzu ist erfindungsgemäß die Kupplungseinrichtung 2 vorgesehen, welche einen ersten ortsfesten Ring 7 und einen zweiten rotierenden Ring 8 umfasst. Der erste Ring 7 ist dabei mittels eines Fixierelements 7b am ortsfesten Teil 3 der Spanneinrichtung 1 befestigt. Das Fixierelement 7b ist in diesem Ausführungsbeispiel eine Ringscheibe, welche am ersten Ring 7 und am ortsfesten Teil 3 befestigt ist. Alternativ ist es auch möglich, als Fixierelement eine Vielzahl von kurzen stangenartigen Bauteilen zu verwenden, welche entlang des Umfangs des ortsfesten Teils 3 angeordnet sind.

Wie aus Figur 1 ersichtlich ist, ist ferner am Fixierelement 7b eine Ausgleichseinheit 15 vorgesehen. Die Ausgleichseinheit 15 dient dazu, nach der Montage eine Ausrichtung des ersten Rings 7 relativ zur Rotationsachse X-X zu ermöglichen, um einen möglichst genauen Rundlauf der rotierenden Teile sicherzustellen.

Zwischen dem ersten ortsfesten Ring 7 und dem zweiten rotierenden Ring 8 ist ein umlaufender Ringspalt 10 vorgesehen. Der umlaufende Ringspalt 10 ist über eine erste Bohrung 7a im ersten Ring 7 mit einer Zufuhrleitung 11 verbunden. Über die Zufuhrleitung 11 wird das zur Betätigung verwendete Medium zugeführt. Im zweiten rotierenden Ring 8 ist eine zweite Bohrung 8a vorgesehen, welche den Ringspalt 10 mit einer Abfuhrleitung 12 verbindet. Die Abfuhrleitung 12 führt das Medium dabei zu den nicht gezeigten Spannbacken der Spannvorrichtung am rotierenden Teil 4, um ein Werkstück zu spannen bzw. freizugeben.

In Figur 1 ist die Zuführung des Mediums über die Zufuhrleitung 11 mit dem Pfeil B gekennzeichnet und die Weiterführung des Mediums über die Abfuhrleitung 12 durch den Pfeil C gekennzeichnet. Zwischen dem ortsfesten Ring 7 und dem rotierenden Ring 8 ist ferner ein zweites Lager 9 mit einer Vielzahl von Kugeln 9a angeordnet.

Zur Abdichtung des Ringspalts 10 sowie des Lagers 9 zwischen dem ersten Ring 7 und dem zweiten Ring 8 ist an einer radialen Innenseite ein innerer Dichtring 13 und an einer radialen Außenseite ein äußerer Dichtring 14 vorgesehen. Wie aus Figur 1 ersichtlich ist, dichten die beiden Dichtringe 13, 14 sowohl den Ringspalt 10 als auch das Lager 9 ab.

Die Funktion der erfindungsgemäßen Kupplungseinrichtung ist dabei wie folgt. Über die Zufuhrleitung 11 kann ein Medium wie z.B. Druckluft oder auch ein Unterdruck über die Bohrung 7a zum umlaufenden Ringspalt 10 zugeführt werden. Wie aus Figur 1 ersichtlich ist, weist der Ringspalt 10 eine Breite in Radialrichtung auf, welche größer als ein Durchmesser der Bohrungen 7a und 8a ist. Über die mit dem zweiten rotierenden Ring 8 mitrotierende zweite Bohrung 8a wird das Medium dann in die Abfuhrleitung 12 zugeführt und zu den Spannbacken geführt.

Somit kann die erfindungsgemäße Kupplungseinrichtung 2 auf einfache Weise eine Übertragung von Drücken von einem ortsfesten Bauteil zu einem rotierenden Bauteil ermöglichen. Dabei ist besonders vorteilhaft, dass eine Rotationsachse X-X nicht durch die Kupplungseinrichtung blockiert ist, sondern wie im beschriebenen Ausführungsbeispiel für den Antrieb mittels der Antriebswelle 6 vorgesehen sein kann. Hierdurch können insbesondere einfache und kostengünstige Bauteile für den Antrieb vorgesehen werden. Alternativ können durch die Rotationsachse X-X auch andere Durchführungen o.ä. durchgeführt werden. Weiter bevorzugt kann die erfindungsgemäße Kupplungseinrichtwig 2 insbesondere auch zur Nachrüstung von schon bestehenden Systemen verwendet werden. Beispielsweise kann eine Nachrüstung bei schon vorhandenen Spannvorrichtungen problemlos an dem äußeren Umfang der Spannvorrichtung vorgesehen werden, um so auf einfache Weise eine Umrüstung, beispielsweise von einer hydraulischen Betätigung der Spannbacken zu einer pneumatischen Betätigung zu erreichen. Hierbei sind insbesondere keine großen technischen Änderungen an der Spannvorrichtung notwendig.

Die Ausgleichseinheit 15 kann ferner ermöglichen, dass die Kupplungseinrichtung 2 auch bei Kipp- und/oder Zentriertischen verwendet werden kann, bei denen der rotierende Teil 4 der Spindel gegenüber der Drehachse X-X geneigt oder verschoben werden kann. Eine derartige Lageänderung kann dann durch die Ausgleichseinheit 15 ausgeglichen werden.

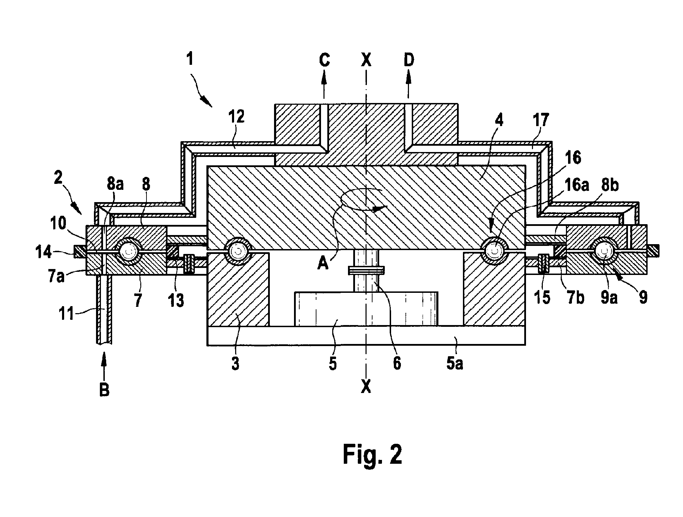

Nachfolgend wird unter Bezugnahme auf Figur 2 eine Spannvorrichtung 1 mit einer Kupplungseinrichtung 2 gemäß einem zweiten Ausführungsbeispiel der Erfindung im Detail beschrieben. Gleiche bzw. funktional gleiche Teile sind dabei mit den gleichen Bezugszeichen wie im ersten Ausfiihrungsbeispiel bezeichnet.

Das zweite Ausfiihrungsbeispiel entspricht im Wesentlichen dem ersten Ausführungsbeispiel, wobei im Unterschied zum ersten Ausführungsbeispiel beim zweiten Ausführungsbeispiel zusätzlich noch eine zweite Abfuhrleitung 17 vorgesehen ist. Die erste Abfuhrleitung 12 ist wie im ersten Ausführungsbeispiel aufgebaut und die zweite Abfuhrleitung 17 ist um 180° gegenüber der ersten Abfuhrleitung 12 am zweiten rotierenden Ring 8 angeordnet. Eine Versorgung mit Medium der zweiten Abfuhrleitung 17 erfolgt dabei über den Ringspalt 10. Somit kann das Medium auf einfache Weise an unterschiedliche Stellen der Spannvorrichtung geleitet werden. Ferner weist die Kupplungseinrichtung 2 gemäß dem zweiten Ausführungsbeispiel eine etwas höhere Stabilität auf, da die rotierenden Bauteile symmetrisch zur Rotationsachse X-X ausgebildet sind. In Figur 2 bezeichnet der Pfeil D dabei das über die zweite Abfuhrleitung 17 abgeführte Medium.

Ansonsten entspricht dieses Ausführungsbeispiel dem ersten Ausführungsbeispiel, so dass auf die dort gegebene Beschreibung verwiesen werden kann.

## Patentansprüche

1. Kupplungseinrichtung zur Übertragung eines Mediums von einem ortsfesten Bauteil auf ein rotierendes Bauteil, umfassend
- einen ortsfesten ersten Ring (7), welcher an einem ortsfesten Teil (3) fixiert ist,
- einen zweiten drehbaren Ring (8), welcher an einem drehbaren Teil (4) fixiert ist und sich gemeinsam mit dem drehbaren Teil (4) dreht,
- ein Lager (9), welches zwischen dem ersten Ring (7) und dem zweiten Ring (8) angeordnet ist,
- einen Ringspalt (10), welcher zwischen dem ersten Ring (7) und dem zweiten Ring (8) angeordnet ist und mit dem Medium gefüllt ist,
- eine Zufuhrleitung (11), welche am ersten Ring (7) zum Zuführen des Mediums in den Ringspalt (10) angeordnet ist,
- eine Abfuhrleitung (12), welche am zweiten Ring (8) zum Weiterleiten des Mediums vom Ringspalt (10) angeordnet ist, wobei sich die Abfuhrleitung (12) mit dem zweiten Ring (8) dreht,
- ein inneres Dichtelement (13), welches den Ringspalt (10) an einer radialen Innenseite abdichtet,
- und ein äußeres Dichtelement (14), welches den Ringspalt (10) an einer radialen Außenseite abdichtet.

2. Kupplungseinrichtung nach Anspruch 1, ferner umfassend eine Ausgleichseinheit (15), welche zwischen dem ortsfesten Ring (7) und einem ortsfesten Teil (3) angeordnet ist, um eine Position des ersten Rings (7) relativ zu einer Rotationsachse (X-X) auszurichten.

3. Kupplungseinrichtung nach Anspruch 1 oder 2, **dadurch gekennzeichnet, dass** das Dichtelement (13, 14) ein Dichtring oder eine Labyrinthdichtung ist.

4. Kupplungseinrichtung nach einem der vorhergehenden Ansprüche, **dadurch gekennzeichnet, dass** das Lager (9) zwischen dem ersten Ring (7) und dem zweiten Ring (8) ein Wälzlager, insbesondere ein Kugellager mit offenem Käfig, ist.

5. Kupplungseinrichtung nach einem der vorhergehenden Ansprüche, **dadurch gekennzeichnet, dass** am rotierenden zweiten Ring (8) eine Vielzahl von Abfuhrleitungen (12, 17) angeordnet ist.

6. Kupplungseinrichtung nach einem der vorhergehenden Ansprüche, **dadurch gekennzeichnet, dass** die Abfuhrleitung (12) mit einer Spannvorrichtung (1) zum Spannen von Werkstücken verbunden ist.

7. Kupplungseinrichtung nach einem der vorhergehenden Ansprüche, **dadurch gekennzeichnet, dass** die Kupplungseinrichtung zentrisch zu einer Rotationsachse (X-X) des rotierenden Teils (4) angeordnet ist.

8. Spannvorrichtung, umfassend eine Kupplungseinrichtung (2) nach einem der vorhergehenden Ansprüche.

9. Werkzeugmaschine oder Messmaschine, ui fassend eine Spannvorrichtung nach Anspruch 8.

## Claims

1. Coupling device for transferring a medium from a stationary component to a rotating component, comprising
- a stationary first ring (7) which is fixed on a stationary part (3),
- a second rotatable ring (8) which is fixed on a rotatable part (4) and rotates together with the rotatable part (4),
- a bearing (9) which is arranged between the first ring (7) and the second ring (8),
- an annular gap (10) which is arranged between the first ring (7) and the second ring (8) and is filled with the medium,
- a feed line (11) which is arranged on the first ring (7) for feeding the medium into the annular gap (10),
- a discharge line (12) which is arranged on the second ring (8) for conducting the medium further from the annular gap (10), the discharge line (12) rotating with the second ring (8),
- an inner sealing element (13) which seals the annular gap (10) on a radial inner side,
- and an outer sealing element (14) which seals the annular gap (10) on a radial outer side.

2. Coupling device according to Claim 1, comprising, furthermore, a compensation unit (15) which is arranged between the stationary ring (7) and a stationary part (3), in order to orient a position of the first ring (7) relative to a rotational axis (X-X).

3. Coupling device according to Claim 1 or 2, **characterized in that** the sealing element (13, 14) is a sealing ring or a labyrinth seal.

4. Coupling device according to one of the preceding claims, **characterized in that** the bearing (9) between the first ring (7) and the second ring (8) is an anti-friction bearing, in particular a ball bearing with an open cage.

5. Coupling device according to one of the preceding claims, **characterized in that** a multiplicity of discharge lines (12, 17) are arranged on the rotating second ring (8).

6. Coupling device according to one of the preceding claims, **characterized in that** the discharge line (12) is connected to a clamping apparatus (1) for clamping workpieces.

7. Coupling device according to one of the preceding claims, **characterized in that** the coupling device is arranged centrically with respect to a rotational axis (X-X) of the rotating part (4).

8. Clamping apparatus, comprising a coupling device (2) according to one of the preceding claims.

9. Machine tool or measuring machine, comprising a clamping apparatus according to Claim 8.

## Revendications

1. Dispositif d'accouplement pour le transfert d'un fluide d'un composant fixe à un composant rotatif, comprenant
- une première bague fixe (7) qui est fixée à une partie fixe (3),
- une deuxième bague rotative (8) qui est fixée à une partie rotative (4) et qui tourne conjointement avec la partie rotative (4),
- un palier (9) qui est disposé entre la première bague (7) et la deuxième bague (8),
- une fente annulaire (10) qui est disposée entre la première bague (7) et la deuxième bague (8) et qui est remplie du fluide,
- une conduite d'alimentation (11) qui est disposée au niveau de la première bague (7) pour l'alimentation du fluide dans la fente annulaire (10),
- une conduite d'évacuation (12) qui est disposée au niveau de la deuxième bague (8) pour transporter le fluide depuis la fente annulaire (10), la conduite d'évacuation (12) tournant avec la deuxième bague (8),
- un élément d'étanchéité interne (13) qui étanchéifie la fente annulaire (10) au niveau d'un côté interne radial,
- et un élément d'étanchéité externe (14) qui étanchéifie la fente annulaire (10) au niveau d'un côté externe radial.

2. Dispositif d'accouplement selon la revendication 1, comprenant en outre une unité de compensation (15) qui est disposée entre la bague fixe (7) et une partie fixe (3), afin d'orienter une position de la première bague (7) par rapport à un axe de rotation (X-X).

3. Dispositif d'accouplement selon la revendication 1 ou 2, **caractérisé en ce que** l'élément d'étanchéité (13, 14) est une bague d'étanchéité ou un joint d'étanchéité à labyrinthe.

4. Dispositif d'accouplement selon l'une quelconque des revendications précédentes, **caractérisé en ce que** le palier (9) entre la première bague (7) et la deuxième bague (8) est un palier à roulement, en particulier un roulement à billes avec une cage ouverte.

5. Dispositif d'accouplement selon l'une quelconque des revendications précédentes, **caractérisé en ce qu'**une pluralité de conduites d'évacuation (12, 17) sont disposées au niveau de la deuxième bague rotative (8).

6. Dispositif d'accouplement selon l'une quelconque des revendications précédentes, **caractérisé en ce que** la conduite d'évacuation (12) est connectée à un dispositif de serrage (1) pour serrer des pièces.

7. Dispositif d'accouplement selon l'une quelconque des revendications précédentes, **caractérisé en ce que** le dispositif d'accouplement est disposé centralement par rapport à un axe de rotation (X-X) de la partie rotative (4).

8. Dispositif de serrage, comprenant un dispositif d'accouplement (2) selon l'une quelconque des revendications précédentes.

9. Machine-outil ou machine de mesure comprenant un dispositif de serrage selon la revendication 8.
